# EUROPÄISCHE PATENTANMELDUNG

(11) **EP 1 124 361 A2**
(43) Veröffentlichungstag der Anmeldung: **16.08.2001**
(21) Anmeldenummer: 01102585.5
(22) Anmeldetag: 06.02.2001
(51) Int. Cl.: H04L 29/06

(54) **Verfahren zum Steuern zusätzlicher Leistungsfunktionen sowie zugehöriges Kommunikationsnetz und zugehöriges Programm**

(30) Priorität: 10.02.2000 DE 10005798
(71) Anmelder: SIEMENS AKTIENGESELLSCHAFT, 80333 München (DE)
(72) Erfinder: Bardehle, Lutz, 33154 Salzkotten (DE)

(57) **Zusammenfassung**

Erläutert wird unter anderem ein Verfahren zum Steuern einer Anrufverteilung, bei dem Daten zwischen mehreren Endgeräten (D1 bis D3) eines Telekommunikationsnetzes (10) unter Verwendung mindestens eines Kennzeichens übertragen werden, das gemäß einem ersten Verbindungsmodell zur Kennzeichnung einer Verbindung dient. Das Verbindungskennzeichen wird in mindestens ein Kennzeichen umgewandelt, das gemäß einem für die Steuerung der Anrufverteilung von einem Rechner aus vorgesehenen zweiten Verbindungsmodell zur Kennzeichnung einer Verbindung dient. Durch diese Maßnahmen lassen sich verschiedene internationale Standards gleichzeitig erfüllen.

## Beschreibung

Verfahren zum Steuern zusätzlicher Leistungsfunktionen sowie zugehöriges Kommunikationsnetz und zugehöriges Programm

Die Erfindung betrifft ein Verfahren zum Steuern zusätzlicher Leistungsfunktionen, bei dem Daten zu mindestens einem Endgerät in einem Telekommunikationsnetz bzw. Kommunikationsnetz unter Verwendung mindestens eines Kennzeichens übertragen werden. Das Kennzeichen kennzeichnet in einem ersten Verbindungsmodell eine Verbindung.

Ein solches Verfahren ist beispielsweise in den folgenden internationalen Standards der ITU-T (International Telecommunication Union-Telecommunication) standardisiert:
- H.323(02/98) Packed Based Multimedia Communications Systems,
- H.225.0(02/98) Call Signalling Protocols and Mediastream Packetization for Packed-Based Multimedia Communications Systems, und
- H.245(05/99) Control Protocol for Multimedia Communication.

Das diesen Standards zugrundeliegende Verbindungsmodell legt ein Kennzeichen, CallID genannt, fest, das eine Verbindung zwischen zwei Endgeräten eindeutig kennzeichnet. Andere Kennzeichen werden für Konferenzschaltungen unter Einbeziehung mehrerer Endgeräte verwendet, z.B. das Kennzeichen ConferenceID.

Auf den Standard H.323 aufbauend wurden eine Anzahl von zusätzlichen Leistungsfunktionen standardisiert:
- H.450.1(02/98) Generic Functional Protocol for the Support of Supplementary Services,
- H.450.2(02/98) Call Transfer Supplementary Service for H.323,
- H.450.3(02/98) Call Diversion Supplementary Service for H.323,
- H.450.4(05/99) Call Hold Supplementary Service for H.323,
- H.450.5(05/99) Call Park and Call Pickup Supplementary Services for H.323,
- H.450.6(05/99) Call Waiting Supplementary Service for H.323,
- H.450.7(05/99) Message Waiting Indications Supplementary Service for H.323.

Die genannten Zusatzfunktionen wurden auf der Grundlage des im Standard H.323 festgelegten Verbindungsmodells entwickelt. Dieses Verbindungsmodell ist sehr einfach, jedoch nicht für alle Anwendungen geeignet.

Es ist Aufgabe der Erfindung, ein einfaches Verfahren zum Steuern zusätzlicher Leistungsfunktionen anzugeben, mit dessen Hilfe auch Leistungsfunktionen gesteuert werden können, für die das erste Verbindungsmodell nur bedingt geeignet ist. Außerdem sollen ein zugehöriges Kommunikationsnetz und ein zugehöriges Programm angegeben werden.

Die das Verfahren betreffende Aufgabe wird durch die im Patentanspruch 1 angegebenen Verfahrensschritte gelöst. Weiterbildungen sind in den Unteransprüchen angegeben.

Die Erfindung geht von der Erkenntnis aus, daß es für jede Leistungsfunktion ein bevorzugtes Verbindungsmodell gibt, bei dessen Verwendung sich die Leistungsfunktion auf sehr einfache Art realisieren läßt. So ist beispielsweise im ECMA-Standard (European Computer Manufacturer Association) "Services for Computer Supported Telecommunications Applications (CSTA) Phase III", Abschnitt 6.1.5, ein Verbindungsmodell erläutert, bei dem zwischen zwei Endgeräten ein gemeinsamer Ruf besteht. Eine erste Verbindung besteht zwischen dem ersten Endgerät und dem Ruf. Eine zweite Verbindung besteht zwischen dem Ruf und dem zweiten Endgerät. Die Verbindungen werden durch das Gerätekennzeichen des an der Verbindung beteiligten Gerätes und durch ein Rufkennzeichen für den beteiligten Ruf eindeutig gekennzeichnet. Dieses Verbindungsmodell ist zwar komplizierter als das im Standard H.323 festgelegte Verbindungsmodell, eignet sich jedoch besser für die Ausführung bestimmter Leistungsfunktionen. Beispielsweise kann bei einer Anrufweiterleitung ein Teil der Kennzeichen beibehalten werden. Werden beispielsweise nur zwei Verbindungsmodelle betrachtet, so lassen sich diesen Verbindungsmodellen jeweils eine Anzahl von Leistungsfunktionen zuordnen, bei deren Realisierung das eine oder das andere Verbindungsmodell besser geeignet ist.

Die Erfindung geht außerdem von der Erkenntnis aus, daß es einfacher ist, mehrere Standards durch zusätzliche Maßnahmen einzuhalten, als einen Standard um die Leistungsfunktionen des anderen Standards zu ergänzen. Für die Ausarbeitung eines Standards bzw. dessen Überarbeitung sind nämlich oft mehrere Jahre notwendig.

Deshalb wird beim erfindungsgemäßen Verfahren das im ersten Verbindungsmodell vorgesehene Kennzeichen in mindestens ein Kennzeichen umgewandelt, das gemäß einem zweiten Verbindungsmodell zur Kennzeichnung einer Verbindung dient. Die Verbindungsmodelle und auch die jeweiligen Kennzeichen weichen voneinander in ihrem Aufbau und/oder in ihrem Wert ab. Das zweite Verbindungsmodell ist für die Steuerung zusätzlicher Leistungsfunktionen der Endgeräte von einem Rechner aus vorgesehen, der selbst keinem Endgerät zugeordnet ist. Ein solches Steuerung wird auch als "Third Party"-Steuerung bezeichnet. Beim erfindungsgemäßen Verfahren wird die Funktionalität der Endgeräte um mindestens eine zusätzliche Leistungsfunktion unter Verwendung der im zweiten Modell vorgesehenen Kennzeichen erweitert.

So werden Grundfunktionen der Endgeräte, wie z.B. Verbindungsauf- und -abbau, gemäß erstem Verbindungsmodell gesteuert. Bestimmte zusätzliche Leistungsfunktionen werden gemäß zweitem Verbindungsmodell gesteuert. Aufgrund der Umwandlung der Kennzeichen kann auf einfache Art von einem Verbindungsmodell auf das andere Verbindungsmodell gewechselt werden. Durch das erfindungsgemäße Verfahren wird erreicht, daß für verschiedene Leistungsfunktionen jeweils ein Verfahren verwendet werden kann, das auf einem unterschiedlichen Verbindungsmodell, nämlich auf einem am besten geeigneten Verbindungsmodell, aufbaut.

Bei einer Weiterbildung enthalten die im Telekommunikationsnetz übertragenen Daten Daten unterschiedlicher Medienarten, insbesondere Sprachdaten und/oder Bilddaten und/oder Programmdaten. Das erste Verbindungsmodell wird also für die Übertragung von Multimediadaten genutzt. Ein weit verbreiteter Standard für eine solche Übertragung ist der von der ITU-T (International Telecommunication Union-Telecommunication) festgelegte Standard H.323.

Bei einer nächsten Ausgestaltung ist das im ersten Verbindungsmodell festgelegte Kennzeichen ein Verbindungskennzeichen, CallID genannt, das eine zwischen mindestens zwei Endgeräten aufzubauende oder bestehende Verbindung kennzeichnet. Das Verbindungskennzeichen ist einteilig. Eine Beziehung zu einem oder sogar zu beiden an der Verbindung beteiligten Endgeräten besteht nicht.

Zusätzlich oder alternativ ist das zweite Verbindungsmodell für die Steuerung zusätzlicher Leistungsfunktionen der Endgeräte in einem Telekommunikationsnetz von einem Rechner aus ebenfalls gemäß einem internationalen Standard festgelegt, insbesondere nach dem Standard CSTA der ECMA; beispielsweise nach dem Standard CSTA III. Jedoch werden bei der Weiterbildung auch andere Standards eingesetzt, z.B. der Standard TAPI (Telephone Application Programming Interface) der Firma MICROSOFT oder der Standard JTAPI der Firma SUN.

Bei einer nächsten Weiterbildung enthält das im zweiten Verbindungsmodell festgelegte Kennzeichen einen ersten Teil zur Kennzeichnung eines an der Verbindung beteiligten Endgerätes und einen zweiten Teil zur Kennzeichnung des durch die Verbindung betroffenen Rufes. Ein solches Verbindungsmodell ist beispielsweise im Standard CSTA festgelegt.

Bei einer anderen Weiterbildung betrifft die zusätzliche Leistungsfunktion eine automatische Rufverteilung von einem zentralen Endgerät für die zentrale Anwahl auf Annahmeendgeräte zur Rufannahme. Bisher wurde die automatische Rufverteilung hauptsächlich für Endgeräte zur Sprachübertragung in sogenannte Call-Centern eingesetzt. Durch die Ausgestaltung wird der Anwendungsbereich der automatischen Rufverteilung auch auf Multimedia-Endgeräte ausgedehnt, die gemäß einem Verfahren angesteuert werden, das auf einem anderen Verbindungsmodell aufbaut als es z.B. im Standard CSTA festgelegt ist.

Bei einer Ausgestaltung der zusätzlichen Leistungsfunktion Rufverteilung werden in dem zentralen Endgerät und in den Annahmeendgeräten jeweils Zubringerprogramme ausgeführt. Beim Ausführen eines Zubringerprogramms werden Nachrichten mit einem zentralen Umwandlungsprogramm ausgetauscht, das als Schnittstelle zwischen einem Steuerrechner für die Steuerung der Rufverteilung und zwischen in die Rufverteilung einzubeziehenden Endgeräten arbeitet. Die Zubringerprogramme werden auch als Deputy-Programme bezeichnet. Für das Umwandlungsprogramm wird der Name Marshall-Programm verwendet. Zur Kommunikation zwischen dem Zubringerprogramm und den Umwandlungsprogrammen wird ein Protokoll verwendet, das an das für die Rufverteilung angewendete Protokoll angelehnt ist. Durch das Konzept von Umwandlungsprogramm und Zubringerprogrammen lassen sich Endgeräte, die eigentlich gemäß einem anderen Protokoll angesteuert werden müssen, dennoch mit einem für die Rufverteilung geeigneten Protokoll ansteuern. In diesem Zusammenhang wird auf die deutsche Patentanmeldung mit der Anmeldenummer 19947032.4 verwiesen.

Bei einer Ausgestaltung der Erfindung werden die Kennzeichen bei der Ausführung des zentralen Umwandlungsprogramms umgewandelt. Ein Programm zur Umwandlung der Kennzeichen muß somit bei dieser Ausgestaltung nur einmal vorhanden sein. Die Endgeräte selbst müssen keine Kennzeichen umwandeln. Ebenso müssen im Steuerprogramm für die Rufverteilung keine Kennzeichen umgewandelt werden.

Die rufenden Endgeräte können ein Zubringerprogramm enthalten, müssen dies jedoch nicht. Bei einer Weiterbildung werden von Endgeräten ohne Zubringerprogramm kommende Anrufe nach dem gleichen Verfahren verteilt, wie von Endgeräten mit Zubringerprogramm kommende Anrufe. Dies ist möglich, weil ein rufendes Endgerät nicht über ein Verfahren angesteuert werden muß, das auf dem zweiten Verbindungsmodell aufbaut. Das rufende Endgerät kann über ein Verfahren angesteuert werden, das auf dem ersten Verbindungsmodell aufbaut, z.B. bei einer Anrufweiterleitung.

Bei einer anderen Weiterbildung wird beim Start eines Zubringerprogramms jeweils an das Umwandlungsprogramm eine Registriernachricht gesendet, die ein Datum zur Kennzeichnung des sendenden Endgerätes enthält. Durch diese Maßnahme ist das Umwandlungsprogramm über Endgeräte informiert, die in die Rufverteilung einbezogen werden können.

Das Umwandlungsprogramm sendet bei einer Ausgestaltung die Kennzeichen ausgewählter oder aller registrierten Endgeräte an das Steuerprogramm. Dies erfolgt automatisch oder auf eine vom Steuerprogramm kommende Aufforderung hin. Das Steuerprogramm kann an Hand der Kennzeichen entscheiden, welche Endgeräte es überwachen will. Die ausgewählten Endgeräte werden überwacht, wobei das Umwandlungsprogramm die von den überwachten Geräten eintreffenden Nachrichten an das Steuerprogramm weiterleitet. Auf jeden Fall muß das zentrale Endgerät überwacht werden. Zwischen den Endgeräten und der Umwandlungseinheit wird bei einer Ausgestaltung ein Protokoll verwendet, das an ein Protokoll angelehnt ist, das auf dem zweiten Verbindungsmodell aufbaut. Als Vorbild ist der Standard CSTA III besonders geeignet.

Zwischen Umwandlungsprogramm und Steuerprogramm wird bei einer nächsten Ausgestaltung ein Verteilprogramm eingesetzt, das die Weiterleitung von Nachrichten abhängig von Zielvorgaben steuert. Ein solches Programm wird beispielsweise auf einem Telekommunikationsserver ausgeführt. Die Weiterleitung erfolgt an Hand von Programmkennzeichen und/oder an Hand von Domänenamen. So werden bei einer Weiterbildung vom Steuerprogramm kommende Nachrichten an das Umwandlungsprogramm an Hand eines vom Steuerprogramm erzeugten Kennzeichens weitergeleitet, das das Umwandlungsprogramm bezeichnet. Vom Umwandlungsprogramm kommende Nachrichten enthalten ein Kennzeichen, das zuvor in einer Nachricht zur Überwachung eines bestimmten Endgerätes vom Steuerprogramm an das Umwandlungsprogramm übermittelt worden ist.

Bei einer nächsten Weiterbildung wird im Annahmeendgerät ein Rufannahmeprogramm ausgeführt. Bei der Ausführung des Rufannahmeprogramm erzeugte Nachrichten werden über das Verteilprogramm an das Umwandlungsprogramm weitergeleitet. Nachrichten, die auch für die Steuerung der Rufverteilung erforderlich sind, werden außerdem auch an das Steuerprogramm weitergeleitet. Durch die Weiterleitung der Nachrichten an das Umwandlungsprogramm wird erreicht, daß dem Umwandlungsprogramm sämtliche aktive Endgeräte und auch sämtliche Geräte bekannt sind, die zur Rufannahme geeignet sind. Ist ein Annahmeendgerät später besetzt, so kann das Umwandlungsprogramm eine entsprechende Nachricht selbst erzeugen und an das Steuerprogramm senden, z.B. die Ereignisnachricht "Event AgentBusy".

Die Rufverteilung wird bei einer Ausgestaltung wie folgt ausgeführt. Zunächst wird ein Ruf an das zentrale Endgerät gemäß einem auf dem ersten Verbindungsmodell aufbauenden Verfahren bearbeitet, z.B. nach dem Standard H.323 bzw. nach den mit diesem Standard verknüpften Standards H.225 und H.245. Zusätzlich zu den im Standard vorgesehenen Verfahrensschritten wird vom zentralen Endgerät über das Umwandlungsprogramm an das Steuerprogramm eine Nachricht gesendet, die die Anwahl des zentralen Endgerätes signalisiert. Diese Nachricht ist beispielsweise die im CSTA III-Standard festgelegte Nachricht "Event Delivered". Nach Empfang der die Anwahl signalisierenden Nachricht durch das Steuerprogramm wird von diesem Programm an das zentrale Endgerät eine Nachricht zur Rufumleitung zu einem Annahmeendgerät gesendet. Diese Nachricht ist beispielsweise die CSTA III Nachricht "DeflectCall", bzw. eine daran angelehnte Nachricht "DMDeflectCall". Die Rufumleitung selbst wird dann gemäß dem auf dem ersten Verbindungsmodell aufbauenden Verfahren durchgeführt, d.h. beispielsweise gemäß Standard H.323 und insbesondere gemäß Standard H.450.3. Durch diese Verknüpfung von Verfahren verschiedener Standards entsteht ein einfaches Verfahren zur Rufverteilung. Es kann auf standardisierte Befehle zurückgegriffen werden, und eine Neuentwicklung und Anpassung von Standards wird vermieden.

Bei einer nächsten Weiterbildung wird nach dem Aufbau einer Verbindung zwischen dem rufenden Endgerät und dem den umgeleiteten Ruf empfangenden Annahmegerät vom Umwandlungsprogramm an das Steuerprogramm eine Nachricht gesendet, die den Betriebszustand des Annahmegerätes signalisiert. Durch diese Nachricht wird dem Steuerprogramm mitgeteilt, daß das betreffende Annahmeendgerät zur Zeit nicht für eine Anrufverteilung zur Verfügung steht.

Die Erfindung betrifft außerdem ein Kommunikationsnetz bzw. ein Tele-Kommunikationsnetz, das zur Durchführung des erfindungsgemäßen Verfahrens bzw. zur Durchführung von dessen Weiterbildungen und Ausgestaltungen geeignet ist. Die oben genannten technischen Wirkungen gelten somit auch für das Kommunikationsnetz. Insbesondere kann das Kommunikationsnetz auch Endgeräte enthalten, auf denen die Zubringerprogramme ausgeführt werden. Das erfindungsgemäße Kommunikationsnetz ist für eine Rufverteilung besonders geeignet.

Weiterhin betrifft die Erfindung ein Umwandlungsprogramm, bei dessen Ausführung die Kennzeichen verschiedener Verbindungsmodelle umgewandelt werden. Durch das Umwandlungsprogramm werden die Wirkungen des erfindungsgemäßen Verfahrens und dessen Ausgestaltungen zum großen Teil erst ermöglicht. Bei einer Weiterbildung ist das Umwandlungsprogramm auf einem Datenträger gespeichert, z.B. auf einer Diskette, einer CD (Compact Disc) oder einem Magnetlaufwerk.

Im folgenden werden Ausführungsbeispiele der Erfindung an Hand der beiliegenden Zeichnungen erläutert. Darin zeigen:
- Figur 1: einen Überblick über Programmbausteine für eine Rufverteilung in einem Kommunikationsnetz,
- Figur 2: an ein Umwandlungsprogramm zur Registrierung von Endgeräten gesendete Nachrichten,
- Figur 3: zu Beginn der Überwachung von Endgeräten gesendete Nachrichten,
- Figur 4: beim Aktivieren eines Rufannahme-Endgerätes gesendete Nachrichten,
- Figur 5: beim Anruf eines zentralen Endgerätes gesendete Nachrichten,
- Figur 6: Kennzeichen verschiedener Verbindungsmodelle nach dem Anruf des zentralen Endgerätes,
- Figuren 7A und 7B: bei der Rufverteilung gesendete Nachrichten, und
- Figur 8: Kennzeichen verschiedener Verbindungsmodelle nach einer Rufumleitung im Rahmen der Rufverteilung.

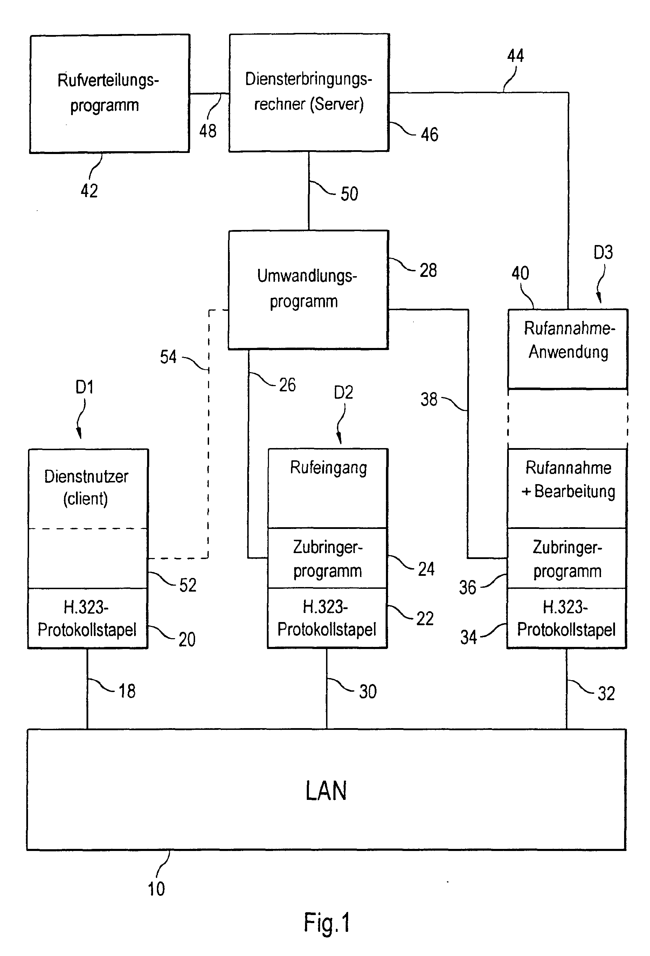

Figur 1 zeigt einen Überblick über Programmbausteine für eine Rufverteilung in einem lokalen Kommunikationsnetz 10, das auch als Local Area Network (LAN) bezeichnet wird. Das Kommunikationsnetz 10 ist beispielsweise ein Ethernet oder ein Token-Ring-Netz. Die Daten werden in Datenpaketen gemäß Standard H.323, H.225 und H.245 übertragen. Übertragen werden Multimediadaten, d.h. Sprachdaten, Bilddaten und Computerdaten, z.B. Programmdaten.

Von den am Kommunikationsnetz 10 betriebenen Endgeräten sind in Figur 1 drei Endgeräte D1 bis D3 dargestellt, die jeweils eine eigene Stromversorgung, einen eigenen Prozessor und einen eigenen Speicher haben. Bei einem anderen Ausführungsbeispiel werden die Programme zum Steuern der Endgeräte D1 bis D3 auf einem einzigen Rechner ausgeführt. Das Endgerät D1 ist über eine Leitung 18 mit dem Kommunikationsnetz 10 verbunden. Beim Ausführen eines im Endgerät D1 gespeicherten Programms werden über die Leitung 18 Befehle gemäß Protokoll H.323 empfangen und gesendet. Programme 20 eines H.323-Protokollstapel unterstützen verschiedene Protokollebenen, die beispielsweise den im Standard H.323, Anhang C, Figur C.1 dargestellten Ebenen im wesentlichen entsprechen. Anstelle der untersten ATM-Ebene (Asynchronous Transfer Mode) wird bei dem erläuterten Ausführungsbeispiel jedoch das Internetprotokoll IP verwendet. Das Endgerät ist ein Dienstnutzungs-Endgerät, mit dessen Hilfe Verbindungen zu anderen Endgeräten D2, D3 aufgebaut bzw. Rufe von anderen Endgeräten D2, D3 entgegengenommen werden.

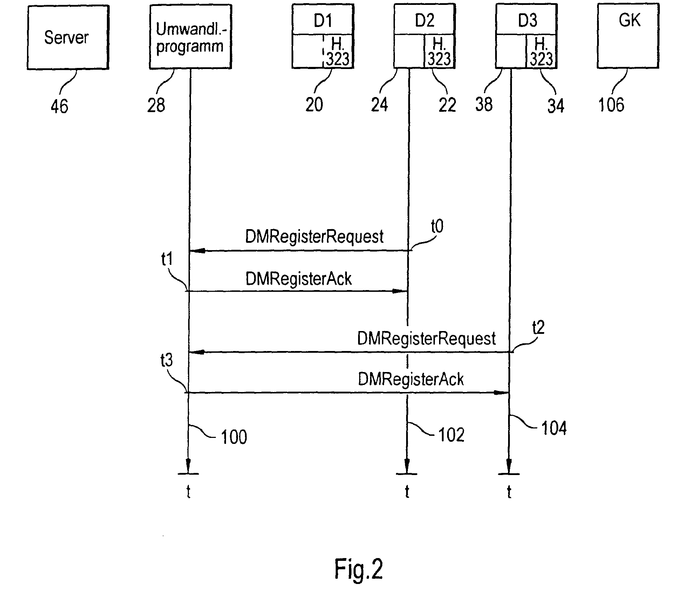

Das Endgerät D2 ist ebenfalls ein Endgerät, mit dem Multimediadaten gemäß Standard H.323 übertragen werden. Im Rahmen einer Rufverteilung hat das Endgerät D2 die Funktion eines zentralen Endgerätes, von dem aus die ankommenden Rufe an weitere Endgeräte, z.B. das Endgerät D3, verteilt werden. Das Endgerät D2 wird deshalb auch als Rufeingangs-Endgerät bezeichnet. Programme 22 eines H.323-Protokollstapel enthalten Programmbausteine zum Erzeugen und Auswerten von Nachrichten unterschiedlicher Protokollebenen. Außerdem ist im Speicher des Endgerätes D2 ein Zubringerprogramm 24 gespeichert, auch Deputy-Programm genannt. Das Zubringerprogramm 24 steht über eine Datenübertragungsverbindung 26 mit einem Umwandlungsprogramm 28 in Verbindung. Das Umwandlungsprogramm 28 ist im Speicher eines entfernten Rechners gespeichert. Bei einem anderen Ausführungsbeispiel wird das Umwandlungsprogramm 28 auf demselben Rechner ausgeführt wie die Programme der Endgeräte D1 bis D3. Mit Hilfe des Zubringerprogramms 24 und des Umwandlungsprogramms 28 läßt sich das Endgerät D2 gemäß Standard CSTA III steuern und überwachen. Die Einzelheiten dieser Steuerung und Überwachung werden unten an Hand der Figuren 2 bis 8 erläutert. Das Endgerät D2 ist über eine Leitung 30 mit dem Kommunikationsnetz 10 verbunden.

Das Endgerät D3 ist über eine Leitung 32 mit dem Kommunikationsnetz 10 verbunden und dient ebenfalls zum Übertragen von Multimediadaten gemäß Standard H.323. Im Speicher des Endgerätes D3 sind Programme 34 gespeichert, die Nachrichten verschiedener Protokollebenen eines H.323-Protokollstapels bearbeiten. Ein Zubringerprogramm 36 ist über eine Datenübertragungsverbindung 38 mit dem Umwandlungsprogramm 28 verbunden. Durch das Zusammenwirken von Umwandlungsprogramm 28 und Zubringerprogramm 36 läßt sich auch das Endgerät D3 gemäß Standard CSTA III steuern und überwachen. Das Endgerät D3 hat im Rahmen der Rufverteilung die Funktion, vom Endgerät D2 verteilte Anrufe entgegenzunehmen. Deshalb wird das Endgerät D3 auch als Rufannahme-Endgerät bezeichnet. Im Speicher des Endgerätes D3 ist ein Rufannahme-Programm 40 gespeichert, auch als "Agent Application" bezeichnet. Unter Nutzung des Rufannahme-Programms 40 kann sich eine Bedienperson des Endgerätes D3 bei einem Rufverteilungs-Programm 42 anmelden. Bei der Anmeldung wird eine Datenübertragungsverbindung 44 zu einem Diensterbringungsrechner 46 aufgebaut, der auch Server genannt wird. Der Diensterbringungsrechner 46 leitet die beim Anmelden über die Datenübertragungsverbindung 44 empfangenen Daten an das Rufverteilungs-Programm 42 über eine Datenübertragungsverbindung 48 weiter.

Der Diensterbringungsrechner 46 leitet auch Nachrichten und Ereignismeldungen weiter, die beim Ausführen des Umwandlungsprogramms 28 erzeugt werden und über eine Datenübertragungsverbindung 50 zum Diensterbringungsrechner übertragen werden. Zum Weiterleiten der Nachrichten und Ereignismeldungen im Diensterbringungsrechner werden Kennzeichen verwendet, die in den Nachrichten enthalten sind. So gehören beispielsweise die Endgeräte D1 bis D3 zu einer gemeinsamen Zone bzw. Domäne, die durch eine eindeutige Adresse gekennzeichnet ist. In den Nachrichten, die an das Umwandlungsprogramm 28 gesendet werden sollen, ist ein Kennzeichen für die Domäne enthalten. Bei Nachrichten, die vom Umwandlungsprogramm 28 an das Rufverteilungs-Programm 42 gesendet werden sollen, ist in der Nachricht ein Kennzeichen enthalten, das zuvor von dem Rufverteilungsprogramm über den Diensterbringungsrechner zum Umwandlungsprogramm gesendet worden ist. Mit Hilfe dieses Kennzeichens erfolgt die Weiterleitung der Nachrichten, siehe auch Erläuterung der Figuren 2 bis 8. Bei anderen Ausführungsbeispielen wird die Nachrichtenverteilung beispielsweise durch das Rufverteilungs-Programm 42 oder das Umwandlungsprogramm 28 gesteuert.

Bei einem anderen Ausführungsbeispiel enthält auch das Endgerät D1 ein Zubringerprogramm 52, das über eine Datenübertragungsverbindung 54 Daten mit dem Umwandlungsprogramm 28 austauscht. Jedoch funktioniert das im folgenden erläuterte Verfahren auch ohne Zubringerprogramm 52 im Endgerät D1.

Figur 2 zeigt an das Umwandlungsprogramm 28 zur Registrierung der Endgeräte D2 und D3 gesendete Nachrichten. Die Nachrichten werden zwischen dem Umwandlungsprogramm 28 und den Endgeräten D2 und D3 mit Hilfe der Zubringerprogramme 24 bzw. 28 gemäß einem firmeninternen Protokoll übertragen, das im wesentlichen mit dem Standard CSTA III übereinstimmt. Die Nachrichten dieses Protokolls werden im folgenden durch die Anfangsbuchstaben "DM" gekennzeichnet. Auf der Seite des Endgerätes D2 werden die an das Umwandlungsprogramm 28 gesendeten Nachrichten durch das Zubringerprogramm 24 erzeugt. Vom Umwandlungsprogramm 28 kommende Nachrichten werden auf der Seite des Endgerätes D2 ebenfalls durch das Zubringerprogramm 24 empfangen und weiterbearbeitet. Im Endgerät D3 werden die an das Umwandlungsprogramm 28 zu sendenden Nachrichten vom Zubringerprogramm 36 erzeugt. Vom Umwandlungsprogramm 28 kommende Nachrichten werden im Endgerät D3 vom Zubringerprogramm 36 bearbeitet.

In Figur 2 sind drei Zeitachsen 100 bis 104 dargestellt, die parallel zueinander liegen und bei denen spätere Zeitpunkte weiter unten abgetragen sind als frühere Zeitpunkte. Gleichzeitige Zeitpunkte liegen auf einer senkrecht zu den Zeitachsen 100 bis 104 liegenden Geraden.

Der Vollständigkeit halber sind in Figur 2 auch der Diensterbringungsrechner 46, das Endgerät D1 sowie eine Zugangseinheit 106 dargestellt. Die Zugangseinheit 106 wird auch als Gatekeeper GK bezeichnet und arbeitet gemäß Standard H.323. Beispielsweise werden in der Zugangseinheit 106 Adressen zugeordnet und Zugriffsrechte geprüft.

Nachrichten zwischen den Endgeräten D1 bis D3 und der Zugangseinheit 106 entsprechen den im Standard H.323, H.225 und H.245 festgelegten Nachrichten. Nachrichten zwischen dem Umwandlungsprogramm und dem Diensterbringungsrechner 46 sowie zwischen dem Diensterbringungsrechner 46 und dem Rufverteilungs-Programm 42 sowie dem Rufannahme-Programm 40, siehe Figur 1, entsprechen den im Standard CSTA III festgelegten Nachrichten.

Zu einem Zeitpunkt t0 wird vom Zubringerprogramm 24 des Endgerätes D2 eine Registrier-Nachricht "DMRegisterRequest" an das Umwandlungsprogramm 28 gesendet. Die Nachricht "DMRegisterRequest" enthält als Parameter "devState" den aktuellen Betriebszustand des Endgerätes D2. Der Empfang der Nachricht "DMRegisterRequest" wird vom Umwandlungsprogramm 28 durch eine Registrierbestätigungs-Nachricht "DMRegisterAck" zu einem Zeitpunkt tl bestätigt. Die Nachricht "DMRegisterAck" wird an das Zubringerprogramm 24 über die Datenübertragungsverbindung 26 übertragen, siehe Figur 1.

Zu einem Zeitpunkt t2 wird vom Zubringerprogramm 36 des Endgerätes D3 ebenfalls eine Nachricht "DMRegisterRequest" an das Umwandlungsprogramm 28 gesendet. Auch diese Nachricht enthält einen Parameter "devState" zur Speicherung des Betriebszustands des Endgerätes D3. Das Umwandlungsprogramm 28 bestätigt zu einem Zeitpunkt t3 den Empfang dieser Nachricht durch eine an das Zubringerprogramm 36 gesendete Nachricht "DMRegisterAck".

Die Nachrichten "DMRegisterRequest" werden von den Endgeräten D2 bzw. D3 beispielsweise beim Einschalten gesendet. Das Umwandlungsprogramm 28 kann aufgrund der Nachrichten "DMRegisterRequest" jederzeit ermitteln, welche Endgeräte D2, D3 zu einem bestimmten Zeitpunkt in Betrieb sind. Die Nachrichten "DMRegisterRequest" enthalten jeweils ein Kennzeichen, z.B. eine Rufnummer oder ein Benutzerkennzeichen, mit dessen Hilfe das Umwandlungsprogramm 28 die Zubringerprogramme 24 bzw. 36 identifizieren und den Geräten D2 bzw. D3 zuordnen kann. Nach dem Empfang der Nachricht "DMRegisterAck" senden die Zubringerprogramme 24 bzw. 36 Ereignisnachrichten an das Umwandlungsprogramm 28, wenn den jeweiligen Ereignisnachrichten zugeordnete Ereignisse in den Endgeräten D2 bzw. D3 auftreten.

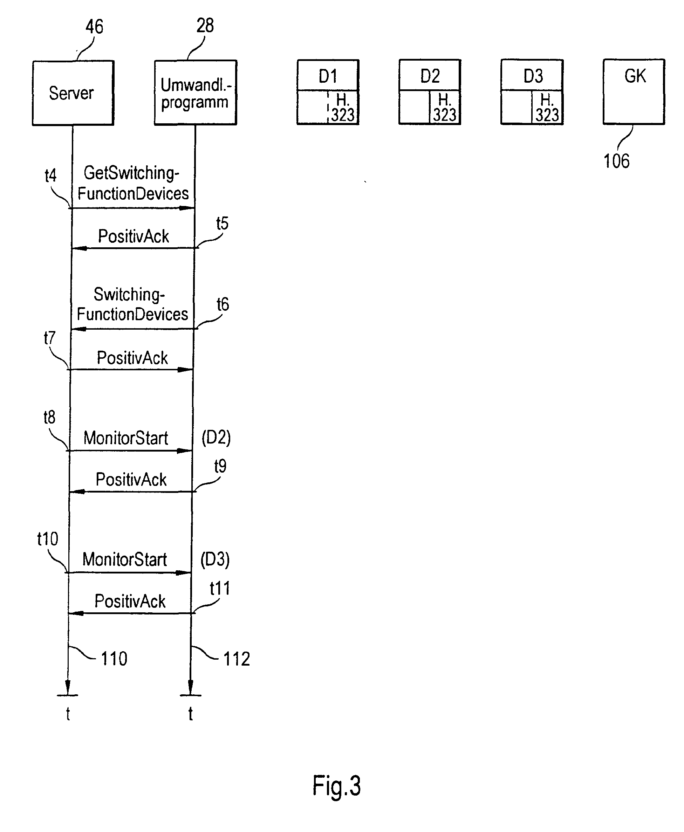

Figur 3 zeigt Nachrichten, die zu Beginn der Überwachung der Endgeräte D2 und D3 durch das Rufverteilungs-Programm 42 zwischen dem Diensterbringungsrechner 46 und dem Umwandlungsprogramm 28 ausgetauscht werden. Wie bereits erwähnt, entsprechen diese Nachrichten den im Standard CSTA III festgelegten Nachrichten. Vorgänge im Diensterbringungsrechner 46 sind auf einer Zeitachse 110 abgetragen. Eine Zeitachse 112 betrifft Vorgänge beim Ausführen des Umwandlungsprogramms 28.

Zu einem Zeitpunkt t4, der nach dem Zeitpunkt t3 liegt, siehe Figur 2, wird vom Diensterbringungsrechner 46 eine ursprünglich vom Rufverteilungs-Programm 42 kommende Nachricht "GetSwitchingFunctionDevices" an das Umwandlungsprogramm 28 weitergeleitet. Die Weiterleitung erfolgt abhängig von einem Domäne-Kennzeichen in der vom Rufverteilungs-Programm 46 kommenden Nachricht. Das Domäne-Kennzeichen ist dem Umwandlungsprogramm 28 zugeordnet. Die Nachricht "GetSwitchingFunction-Devices" dient zum Ermitteln derjenigen Endgeräte, die momentan betriebsbereit sind. Zu einem Zeitpunkt t5 bestätigt das Umwandlungsprogramm 28 den Empfang der Nachricht "GetSwitchingFunctionDevices" durch das Senden einer Nachricht "PositiveAck" über den Diensterbringungsrechner 46 zum Rufverteilungs-Programm 42.

Zu einem Zeitpunkt t6 sendet das Umwandlungsprogramm 28 an das Rufverteilungs-Programm 42 eine Nachricht "SwitchingFunctionDevices", in der eine Geräteliste mit Gerätekennzeichen der Endgeräte D2 und D3 enthalten ist. Die Kennzeichen entsprechen im Ausführungsbeispiel den Namen dieser Geräte, d.h. D2 bzw. D3. Zu einem Zeitpunkt t7 bestätigt das Rufverteilungs-Programm 42 den Empfang der Nachricht "SwitchingFunctionDevices" durch eine Bestätigungsnachricht "PositiveAck", die über den Diensterbringungsrechner 46 zum Umwandlungsprogramm 28 übertragen wird.

Zu einem Zeitpunkt t8 wird vom Diensterbringungsrechner 46 eine vom Rufverteilungs-Programm 42 kommende Nachricht "MonitorStart" an das Umwandlungsprogramm 28 weitergeleitet. Durch die Nachricht "Monitorstart" wird angezeigt, daß das Endgerät D2 vom Rufverteilungs-Programm 42 überwacht werden soll. Deshalb ist in einer Parameterliste der Nachricht "MonitorStart" als Gerätekennzeichen das Kennzeichen D2 angegeben. Die Nachricht "Monitorstart" enthält außerdem Filterangaben darüber, welche Ereignisse an das Rufverteilungs-Programm 42 gemeldet werden sollen. Zu einem Zeitpunkt t9 bestätigt das Umwandlungsprogramm 28 den Empfang der Nachricht "Monitorstart" durch eine Bestätigungsnachricht "PositiveAck", die über den Diensterbringungsrechner 46 zum Rufverteilungs-Programm 42 weitergeleitet wird. Die Bestätigungsnachricht t9 enthält ein Überwachungskennzeichen "monitorCrossRefID" = D2. An Hand dieses Kennzeichens kann die Nachricht "PositiveAck" an das Rufverteilungs-Programm weitergeleitet werden. Außerdem kann das Rufverteilungs-Programm 42 die Nachricht "PositiveAck" mit Hilfe des Überwachungskennzeichens "monitorCrossRefID" eindeutig dem Endgerät D2 zuordnen. Das Überwachungskennzeichen "monitorCrossRefID" = D2 wird in allen Ereignisnachrichten angegeben, die vom Endgerät D2 erzeugt werden, so daß die Weiterleitung durch den Diensterbringungsrechner 46 und die Zuordnung im Rufverteilungs-Programm 42 möglich sind.

Zu einem Zeitpunkt t10 wird eine vom Rufverteilungs-Programm 42 kommende Nachricht "Monitorstart" über den Diensterbringungsrechner 46 zum Umwandlungsprogramm 28 weitergeleitet. Durch diese Nachricht wird das Umwandlungsprogramm 28 aufgefordert, vom Zubringerprogramm 36 kommende Ereignismeldungen an das Rufverteilungs-Programm 42 weiterzugeben. Die zum Zeitpunkt t10 gesendete Nachricht "Monitorstart" enthält ein Gerätekennzeichen "DeviceID" = D3 sowie Angaben über die weiterzuleitenden Nachrichten in einer Filterbedingung.

Zu einem Zeitpunkt t11 bestätigt das Umwandlungsprogramm 28 den Empfang der das Endgerät D3 betreffenden Nachricht "MonitorStart" durch eine Bestätigungsnachricht "PositiveAck", die über den Diensterbringungsrechner 46 an das Rufverteilungs-Programm 42 geleitet wird. In der Bestätigungsnachricht "PositiveAck" hat das Überwachungskennzeichen "monitorCrossRefID" einen auf das Endgerät D3 hinweisenden Wert. Das Überwachungskennzeichen dient wiederum zur Weiterleitung und zur Zuordnung der Überwachungsnachricht.

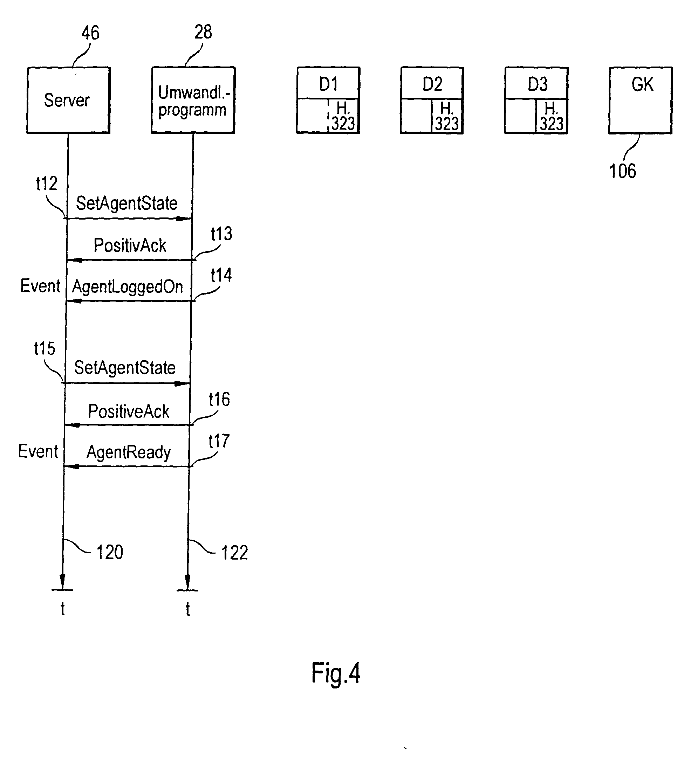

Figur 4 zeigt beim Aktivieren des Rufannahme-Endgerätes D3 gesendete Nachrichten. Eine Zeitachse 120 dient zur Darstellung von Vorgängen im Diensterbringungsrechner 46. Eine Zeitachse 122 ist dem Umwandlungsprogramm 28 zugeordnet.

Ist das Endgerät D3 zur Annahme von am zentralen Endgerät D2 eintreffenden Anrufen bereit, so meldet sich die Bedienperson des Endgerätes D3 mit Hilfe des Rufannahme-Programms 40 an. Dabei wird eine Nachricht "SetAgentState" über die Datenübertragungsverbindung 44 an den Diensterbringungsrechner 46 gesendet. Diese Nachricht wird zum einen an das Rufverteilungs-Programm 42 und zum anderen an das Umwandlungsprogramm 28 zu einem Zeitpunkt t12 weitergeleitet, der nach dem Zeitpunkt t11 liegt. In der Nachricht "SetAgentState" ist als Gerätekennzeichen "DeviceID" das Kennzeichen des Endgerätes D3, d.h. der Bezeichner D3 angegeben. Ein Zustandsparameter "Request.AgentState" hat einen Wert, der dem Zustand bei einer Anmeldung entspricht. Dieser Zustand wird auch als "LoggedOn" bezeichnet. Außerdem enthält die Nachricht ein Kennzeichen "agentID" zur Identifizierung der Bedienperson des Endgerätes D3.

Durch die Nachricht "SetAgentState" wird das Umwandlungsprogramm 28 davon unterrichtet, daß das Endgerät D3 zur Annahme von Rufen im Rahmen der Rufverteilung vorbereitet wird. Zu einem Zeitpunkt t13 bestätigt das Umwandlungsprogramm 28 den Empfang der Nachricht "SetAgentState" durch eine Bestätigungsnachricht "PositiveAck", die über den Diensterbringungsrechner 46 an das Rufverteilungs-Programm 42 weitergeleitet wird. Die Bestätigungsnachricht "PositiveAck" enthält einen Zustandsparameter "pendingAgentState", dessen Wert anzeigt, daß das Endgerät D3 noch nicht zur Annahme von Anrufen im Rahmen der Rufverteilung bereit ist. Dieser Zustand wird auch als "not ready" bezeichnet. Im Rahmen der Überwachung des Endgerätes D3 wird zu einem Zeitpunkt t14 vom Umwandlungsprogramm 28 eine Ereignisnachricht "agentLoggedOn" gesendet. In der Ereignisnachricht ist als Überwachungskennzeichen "monitorCrossRefID" das Kennzeichen des Endgerätes D3 angegeben. Als angemeldetes Endgerät "agentDevice" ist ebenfalls das Kennzeichen D3 des Endgerätes D3 angegeben. Weiterhin enthält die Ereignisnachricht ein Kennzeichen "agentID" zur Identifizierung der Bedienperson des Endgerätes D3.

Sobald das Endgerät D3 zur Annahme von Rufen im Rahmen der Rufverteilung bereit ist, wird vom Rufannahme-Programm 40 über die Datenübertragungsverbindung 44 eine weitere Nachricht "SetAgentState" an das Rufverteilungs-Programm 42 gesendet. Im Diensterbringungsrechner 46 wird an Hand eines in der Nachricht enthaltenen Gerätekennzeichens "DeviceID" = D3 festgestellt, daß das Endgerät D3 betroffen ist. Aus diesem Grund wird die Nachricht auch an das Umwandlungsprogramm 28 zu einem Zeitpunkt t15 weitergeleitet. Der Zustandsparameter "Request.AgentState" hat nun einen Wert, der dem Zustand "fertig" entspricht. Die zum Zeitpunkt t15 übertragene Nachricht "SetAgentState" enthält außerdem das Benutzerkennzeichen "agentID".

Zu einem Zeitpunkt t16 bestätigt das Umwandlungsprogramm 28 den Empfang der zum Zeitpunkt t15 empfangenen Nachricht "SetAgentState" durch eine Bestätigungsnachricht "PositiveAck", in der als Zustandsparameter "pendingAgentState" ein Wert angegeben ist, der den Zustand "fertig" bezeichnet. Die Bestätigungsnachricht "PositiveAck" wird über den Diensterbringungsrechner 46 an das Rufverteilungs-Programm 42 weitergeleitet.

Zu einem Zeitpunkt t17 wird vom Umwandlungsprogramm 28 eine Ereignisnachricht "Event AgentReady" an das Rufverteilungs-Programm 42 gesendet. Die Ereignisnachricht enthält als Überwachungskennzeichen "monitorCrossRefID" das Kennzeichen D3 des Endgerätes D3. Als Rufannahme Endgerät "agentDevice" ist ebenfalls das Kennzeichen D3 angegeben. Die Ereignisnachricht enthält außerdem das Benutzerkennzeichen "agentID" der Bedienperson des Endgerätes D3.

Aufgrund der Nachricht "SetAgentState" mit der Zustandsangabe "fertig" ist das Umwandlungsprogramm 28 in der Lage, das Endgerät D3 als ein Endgerät zu identifizieren, das für die Rufannahme im Rahmen der Rufverteilung eingesetzt werden kann. Gemäß Standard CSTA ist das Endgerät D3 dann ein sogenanntes Agenten-Endgerät.

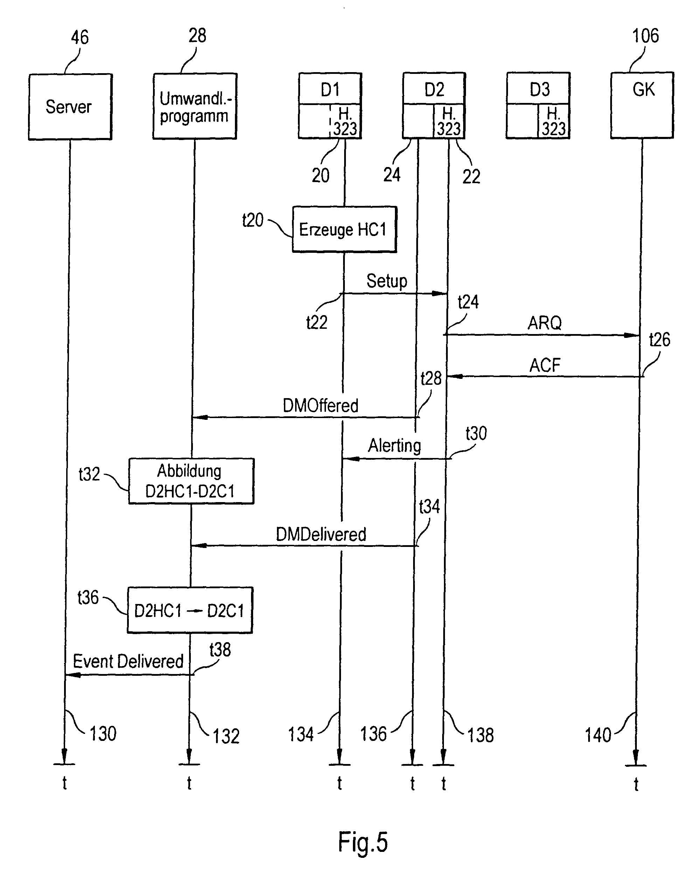

Figur 5 zeigt beim Anruf des zentralen Endgerätes D2 gesendete Nachrichten. Zeitachsen 130 bis 140 sind in dieser Reihenfolge dem Diensterbringungsrechner 46, dem Umwandlungsprogramm 28, den zum H.323-Protokollstapel des Endgerätes D1 gehörenden Programmen 20, dem Zubringerprogramm 24, den zum H.323-Protokollstapel des Endgerätes D2 gehörenden Programmen 22 und der Zugangseinheit 106 zugeordnet. Zu einem Zeitpunkt t20 wird im Endgerät D1 ein Verbindungskennzeichen HC1 erzeugt, das für eine aufzubauende Verbindung verwendet werden soll. Zu einem nach dem Zeitpunkt t20 liegenden Zeitpunkt t22 wird mit Hilfe einer Rufaufbau-Nachricht "Setup" das Endgerät D2 vom Endgerät D1 aus gerufen. Dabei enthält die Nachricht "Setup" das Verbindungskennzeichen "CallID" = HC1. Wie im Standard H.323 vorgesehen, erzeugt das Endgerät D2 eine Zugriffsanforderung ARQ (Admission Request) an die Zugangseinheit 106 zu einem Zeitpunkt t24. Die Zugriffsanforderung enthält als Adresse "SrcCallSigAddr" des anfordernden Endgerätes die Adresse des Endgerätes D2. Außerdem ist eine benötigte Bandbreite angegeben. Die Zugangseinheit 106 bestätigt die Zugriffsanforderung ARQ zu einem Zeitpunkt t26 mit einer Zugriffsbestätigungs-Nachricht ACF (Admission Confirm). Auch die Nachricht ACF entspricht dem Standard H.323.

Nach dem Empfang der Zugriffsbestätigungs-Nachricht ACF im Endgerät D2 wird zu einem Zeitpunkt t28 eine Nachricht "DMOffered" vom Zubringerprogramm 24 an das Umwandlungsprogramm 28 gesendet. Die Nachricht "DMOffered" enthält als Verbindungskennzeichen "CallID" das Kennzeichen HC1. Außerdem ist ein Parameter "callingDirectoryNumber" enthalten, der eine Verzeichnisnummer angibt, die das rufende Endgerät, d.h. das Endgerät D1 betrifft. Durch die Nachricht "DMOffered" wird dem Umwandlungsprogramm 28 angezeigt, daß eine Rufanforderung an das Endgerät D2 besteht. Die Nachricht "DMOffered" entspricht im wesentlichen der im Standard CSTA III festgelegten Nachricht "offered", siehe Abschnitt 17.2.13 des Standards. Zu einem Zeitpunkt t30 wird vom Endgerät D2 eine Alarmnachricht "Alerting" gemäß Standard H.323 gesendet, um zu signalisieren, daß das Endgerät D2 mit Hilfe einer Alarmeinrichtung den ankommenden Ruf anzeigt, z.B. mit Hilfe eines Signalgenerators zum Erzeugen eines Signaltons. In der Alarmnachricht "Alerting" ist als Verbindungskennzeichen "CallID" das Kennzeichen HC1 angegeben.

Zu einem Zeitpunkt t32 wird durch das Umwandlungsprogramm 28 eine Beziehung zwischen einem aus dem Gerätekennzeichen D2 und den Kennzeichen HC1 des Standards H.323 bestehendem Kennzeichen und einem im Standard CSTA III vorgesehenen Kennzeichen hergestellt. Dem Verbindungskennzeichen D2HC1 wird ein Verbindungskennzeichen D2C1 zugeordnet.

Zu einem Zeitpunkt t34 wird vom Zubringerprogramm 24 eine Nachricht "DMDelivered" an das Umwandlungsprogramm 28 gesendet. Diese Nachricht entspricht im wesentlichen der im Standard CSTA III vorgesehenen Nachricht "delivered". Durch die Nachricht "DMDelivered" wird dem Umwandlungsprogramm vom Endgerät D2 angezeigt, daß der ankommende Ruf nun an die Bedienperson signalisiert wird. Die Nachricht "DMDelivered" enthält als Verbindungskennzeichen das Verbindungskennzeichen "CallID" = HC1.

Zu einem Zeitpunkt t36 wandelt das Umwandlungsprogramm 28 das Verbindungskennzeichen HC1 in ein Verbindungskennzeichen gemäß Standard CSTA III um. Dabei wird die zum Zeitpunkt t32 hergestellte Beziehung genutzt, aus der entnehmbar ist, daß zum Verbindungskennzeichen HC1 das Verbindungskennzeichen D2HC1 und zu diesem wiederum das CSTA-Kennzeichen D2C1 gehört.

Zu einem Zeitpunkt t38 sendet das Umwandlungsprogramm eine Ereignisnachricht "Event Delivered" über den Diensterbringungsrechner 46 an das Rufverteilungs-Programm 42. Die Ereignisnachricht enthält mehrere Parameter:
- Das Überwachungskennzeichen "monitorCrossRefID" hat den Wert D2.
- Ein Verbindungskennzeichen "connection" hat den Wert D2C1.
- Als alarmiertes Endgerät "alertingDevice" ist das Endgerät D2 angegeben.
- Ein Parameter "callingDevice" für das rufende Endgerät enthält den Wert D1 für das Endgerät D1.
- Ein Parameter "calledDevice" für das gerufene Endgerät enthält den Wert D2 für das Endgerät D2.

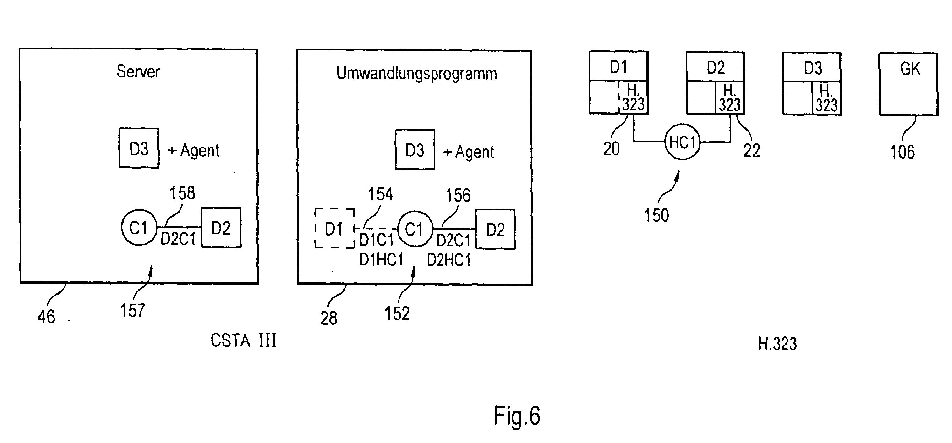

Die Zuordnung von Verbindungskennzeichen verschiedener Verbindungsmodelle zueinander zum Zeitpunkt t38 wird an Hand der Figur 6 ausführlicher erläutert.

Figur 6 zeigt die Verbindungskennzeichen verschiedener Verbindungsmodelle 150 und 152. Das Verbindungsmodell 150 entspricht dem im Standard H.323 verwendeten Verbindungsmodell. Bei diesem Verbindungsmodell wird ein einziges Verbindungskennzeichen den an der Verbindung beteiligten Geräten zugeordnet. Im Ausführungsbeispiel wird das Verbindungskennzeichen HC1 der aufzubauenden Verbindung zwischen den Endgeräten D1 und D2 zugeordnet. Das Verbindungsmodell 152 entspricht im wesentlichen dem im Standard CSTA III festgelegten Modell. Eine Verbindung besteht hier nicht zwischen zwei Endgeräten, sondern zwischen jeweils einem Endgerät und einem Ruf. So ist einer Verbindung 154 zwischen dem Endgerät D1 und einem Ruf Cl das Verbindungskennzeichen D1C1 zugeordnet. Das Verbindungskennzeichen enthält jeweils in einem ersten Teil das Kennzeichen des beteiligten Gerätes, hier D1, und in einem zweiten Teil das Kennzeichen des beteiligten Rufes, hier Cl. In Figur 6 wird durch gestrichelte Linien angedeutet, daß das Umwandlungsprogramm die Verbindung 154 und das Endgerät D1 nur dann in das Modell einbezieht, wenn auch das Endgerät D1 ein Zubringerprogramm 52 hat, siehe Figur 1. Gemäß Verbindungsmodell 152 wird eine Verbindung 156 zwischen dem Ruf C1 und dem Endgerät D2 mit einem Verbindungskennzeichen D2C1 bezeichnet. Außerdem werden die Verbindungen 154, 156 im Verbindungsmodell 152 mit Verbindungskennzeichen gemäß Standard H.323 bezeichnet, denen das Kennzeichen des beteiligten Gerätes vorangestellt ist, siehe z.B. die Verbindungskennzeichen D1HC1 und D2HC1.

Aus Fig. 6 ist außerdem zu entnehmen, daß das Umwandlungsprogramm 28 auf Daten zugreift, die angeben, daß das Endgerät D3 als Endgerät für die Rufannahme im Rahmen der Rufverteilung betriebsbereit ist, d.h. als sogenanntes Agenten-Endgerät. Auf der Seite des Diensterbringungsrechners 46 bzw. auf der Seite des Rufverteilungs-Programms 42 sind in einem Verbindungsmodell 157 nur Kennzeichen gemäß Standard CSTA III bekannt. Im Rufverteilungs-Programm 42 werden auch nur die überwachten Endgeräte D2, D3 in das Verbindungsmodell 157 einbezogen. So gibt es zwischen dem Ruf Cl und dem Endgerät D2 eine Verbindung 158 mit dem Verbindungskennzeichen D2C1, d.h. mit einem Aufbau wie im Standard CSTA III festgelegt. Auf der Seite des Rufverteilungs-Programms 42 ist außerdem bekannt, daß das Endgerät D3 als sogenanntes Agenten-Endgerät zur Rufannahme im Rahmen der Rufverteilung bereit ist.

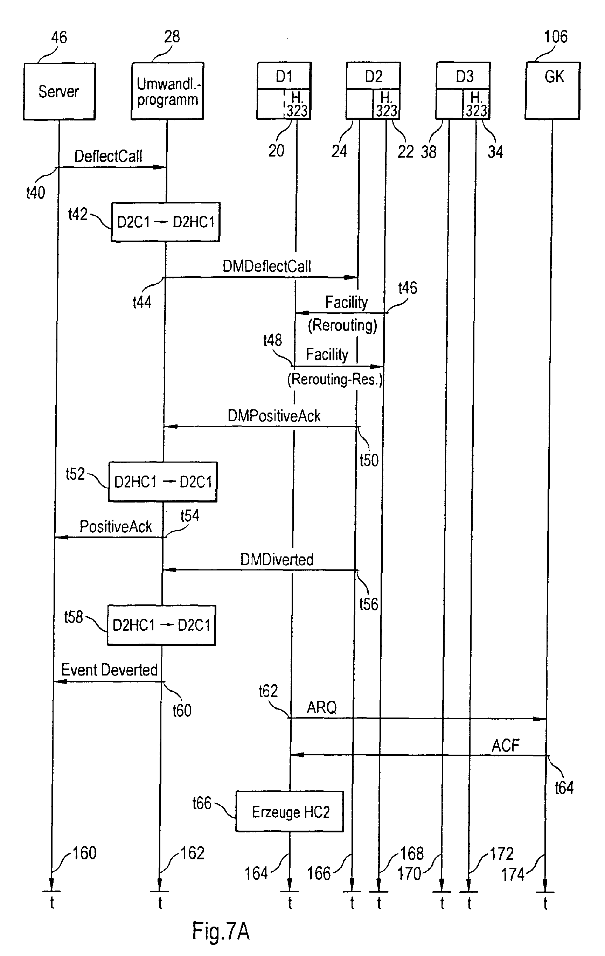

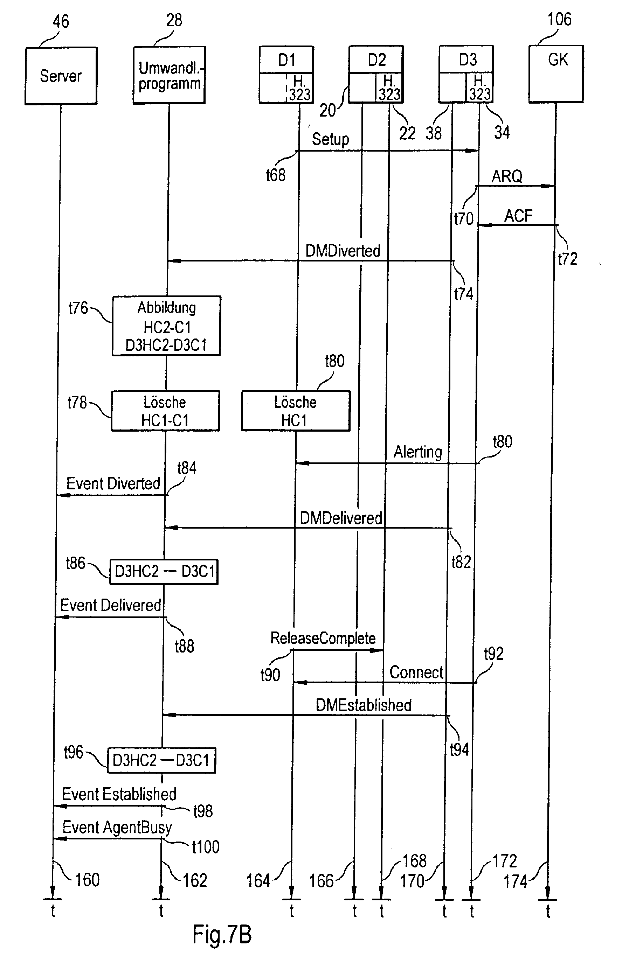

Die Figuren 7A und 7B zeigen bei der Rufverteilung gesendete Nachrichten. Zeitachsen 160 bis 174 sind in dieser Reihenfolge dem Diensterbringungsrechner 46, dem Umwandlungsprogramm 28, den zum H.323-Protokollstapel des Endgerätes D1 gehörenden Programmen 20, dem Zubringerprogramm 24, den zum H.323-Protokollstapel des Endgerätes D2 gehörenden Programmen 22, dem Zubringerprogramm 28, den zum H.323-Protokollstapel gehörenden Programmen 34 sowie der Zugangseinheit 106 zugeordnet. Die Rufverteilung geht vom Rufverteilungs-Programm 42 aus. Aufgrund der zum Zeitpunkt t38 übertragenen Ereignisnachricht "Event Delivered" wird beim Ausführen des Rufverteilungs-Programms 42 die Entscheidung getroffen, den am zentralen Endgerät D2 eingetroffenen Ruf an das Endgerät D3 zu verteilen. Das Rufverteilungs-Programm erzeugt eine Umlenknachricht "DeflectCall" gemäß Standard CSTA III, um den am Endgerät D2 eintreffenden Ruf auf das Endgerät D3 umzulenken. Die Umlenknachricht "DeflectCall" gelangt zunächst zum Diensterbringungsrechner 46 und dann zu einem Zeitpunkt t40 zum Umwandlungsprogramm 28. In den Parametern der Umlenknachricht "DeflectCall" ist die Verbindung D2C1 als von der Umleitung betroffene Verbindung angegeben. Der entsprechende Parameter wird als "callToBeDiverted" bezeichnet. In einem Zielparameter "newDestination" ist das Kennzeichen D3 des Endgerätes D3 angegeben, um das Ziel der Umlenkung festzulegen.

Zu einem Zeitpunkt t42 ermittelt das Umwandlungsprogramm 28 zu dem in der Umlenknachricht "DeflectCall" angegebenen Verbindungskennzeichen D2C1 das zugeordnete Verbindungskennzeichen gemäß dem internen Protokoll. Dies ist das Verbindungskennzeichen D2HC1, wobei der zweite Teil HC1 dem Kennzeichen gemäß Standard H.323 entspricht. Zu einem Zeitpunkt t44 erzeugt das Umwandlungsprogramm 28 eine Umlenknachricht "DMDeflectCall", die an das Zubringerprogramm 24 des Endgerätes D2 gesendet wird. Die Umlenknachricht "DMDeflectCall" enthält als Parameter "callToBeDiverted" für die betroffene Verbindung das Verbindungskennzeichen D2HC1. Der Parameter "newDestination" für das Zielgerät wird aus der Nachricht "DeflectCall" übernommen und hat den Wert D3.

Nach dem Empfang der Nachricht "DMDeflectCall" wird im Endgerät D2 die Rufumlenkung, wie im Standard H.323 und im Standard H.450.3 vorgesehen, durchgeführt. Eine Leistungsmerkmals-Nachricht "Facility" wird zu einem Zeitpunkt t46 vom Endgerät D2 an das Endgerät D1 gesendet. Die Leistungsmerkmals-Nachricht "Facility" enthält mehrere Parameter:
- Ein Parameter "CallRerouting.Invoke" dient zur Kennzeichnung des übergeordneten Leistungsmerkmals Anrufumleitung.
- Als Umleitungsgrund ist in der Leistungsmerkmals-Nachricht "Facility" die Buchstabenfolge "cd" für eine Anrufumlenkung (call deflect) angegeben.
- In einem Parameter "originalCalledNr" für die ursprünglich angerufene Nummer ist die Nummer des Endgerätes D2 enthalten.
- Ein Parameter "calledAddress" für die anzurufende Adresse enthält die Adresse des Endgerätes D3.
- Ein Parameter "callingNumber" für die Nummer des rufenden Endgerätes enthält die Nummer des Endgerätes D1.

Standardgemäß wird vom Endgerät D1 zu einem Zeitpunkt t48 eine Leistungsmerkmals-Nachricht "Facility" zur Bestätigung des Empfangs der ersten Leistungsmerkmals-Nachricht gesendet. In der zum Zeitpunkt t48 gesendeten Nachricht gibt ein Parameter "CallRerouting.Ret.Result" einen Hinweis auf das betroffene Leistungsmerkmal.

Nach dem Empfang der "Facility" Nachricht im Endgerät D2 wird vom Zubringerprogramm 24 zu einem Zeitpunkt t50 eine Bestätigungsnachricht "DMPositiveAck" an das Umwandlungsprogramm 28 gesendet, um die Nachricht "DMDeflectCall" zu bestätigen. Die Nachricht "DMPositiveAck" enthält als Verbindungskennzeichen das Kennzeichen D2HC1.

Zu einem Zeitpunkt t52 ermittelt das Umwandlungsprogramm 28 das zum Kennzeichen D2HC1, d.h. zu dem in der Nachricht "DMPositiveAck" angegebenen Kennzeichen, das Verbindungskennzeichen D2C1 mit einem Aufbau gemäß Standard CSTA III. Zu einem Zeitpunkt t54 sendet das Umwandlungsprogramm 28 eine Bestätigungsnachricht "PositiveAck" an das Rufverteilungs-Programm 42. Als Verbindungskennzeichen in dieser Bestätigungsnachricht ist das Verbindungskennzeichen D2C1 angegeben. Die Bestätigungsnachricht "PositiveAck" bestätigt die Umlenknachricht "DeflectCall".

Zu einem Zeitpunkt t56 sendet das Zubringerprogramm 24 eine Nachricht "DMDiverted" an das Umwandlungsprogramm 28, um die Weitergabe der Anforderung zur Anrufumlenkung an das Endgerät D1 zu berichten:
- Die Nachricht "DMDiverted" enthält als Verbindungskennzeichen "connection" das Kennzeichen D2HC1.
- Als umleitendes Endgerät "divertingDevice" ist das Endgerät D2 angegeben.
- Ein Zielparameter "newDestination" enthält das Kennzeichen D3 des Endgerätes D3.
- In einem Parameter "cause" für den Grund der Umleitung ist angegeben, daß die Rufumleitung aufgrund einer Anforderung des Rufverteilungs-Programms erfolgt, auch "ACD (Automatic Call Distribution) Forward" genannt.
- Ein Parameter "localConnectionInfo" über den Verbindungszustand hat den Wert 0. Dieser Parameter ist im Standard CSTA III festgelegt und wurde für die Nachricht "DMDiverted" übernommen.

Zu einem Zeitpunkt t58 wird im Umwandlungsprogramm 28 das Verbindungskennzeichen D2HC1 aus der Nachricht "DMDiverted" gelesen und in ein Verbindungskennzeichen mit dem im Standard CSTA III vorgegebenen Aufbau umgewandelt, nämlich in das Verbindungskennzeichen D2C1. Anschließend wird zu einem Zeitpunkt t60 das umgewandelte Kennzeichen D2C1 für das Versenden einer Ereignisnachricht "Event Diverted" vom Umwandlungsprogramm 28 über den Diensterbringungsrechner 46 zum Rufumleitungs-Programm 42 verwendet:
- Die Ereignisnachricht "Event Diverted" enthält als Überwachungskennzeichen "monitorCrossRefID" das Kennzeichen des Endgerätes D2.
- Als Verbindungskennzeichen "connection" ist das Verbindungskennzeichen D2C1 angegeben.
- Eine Angabe "divertingDevice" für das umleitende Endgerät wird aus der Nachricht "DMDiverted" entnommen, d.h. das Kennzeichen D2.
- Ebenso werden die Angaben für das Ziel "newDestination", den Grund "cause" und den Verbindungszustand "localConnectionInfo" aus der Nachricht "DMDiverted" in die Nachricht "Event Diverted" übernommen.

Zu einem Zeitpunkt t62 sendet das Endgerät D1 eine Zugriffsanforderungs-Nachricht ARQ an die Zugangseinheit 106. In der Zugriffsanforderungs-Nachricht ARQ ist als Ursprungsadresse "SrcCallSigAddr" die Adresse des Endgerätes D3 angegeben. Außerdem enthält die Nachricht ARQ einen Wert für die angeforderte Bandbreite. Zu einem Zeitpunkt t64 bestätigt die Zugangseinheit 106 die Zugriffsanforderung mit einer Nachricht ACF. Zu einem Zeitpunkt t66 wird nach dem Empfang der Zugriffsbestätigungs-Nachricht ACF im Endgerät D1 ein neues Verbindungskennzeichen HC2 erzeugt. Das Verbindungskennzeichen HC2 wird zu einem Zeitpunkt t68 in einer vom Endgerät D1 an das Endgerät D3 gesendeten Verbindungsaufbau-Nachricht "Setup" verwendet:
- Die Verbindungsaufbau-Nachricht "Setup" wird gemäß Standard H.450.3 erzeugt und enthält einen Leistungsmerkmal Parameter "divertingInfo2.Invoke". Dieser Parameter zeigt an, daß die "Setup"-Nachricht als Folge einer Rufumleitung erzeugt worden ist.
- Ein Zählparameter "diversion Counter" zum Zählen der Rufumleitungen hat in der "Setup"-Nachricht den Wert 1.
- Als Umleitungsgrund "diversionReason" ist eine Rufumlenkung angegeben, auch "Call Deflection" genannt.
- Die "Setup"-Nachricht enthält außerdem einen Parameter zur Angabe der Rufnummer des ursprünglich gerufenen Endgerätes, d.h. des zentralen Endgerätes D2.

Im Endgerät D3 wird die "Setup"-Nachricht standardgemäß bearbeitet. Dabei wird zu einem Zeitpunkt t70 eine Zugriffsanforderungs-Nachricht ARQ an die Zugangseinheit 106 gesendet. Die Nachricht enthält einen Wert für die geforderte Bandbreite. Die Zugriffsanforderungs-Nachricht ARQ wird standardgemäß von der Zugriffseinheit 106 zu einem Zeitpunkt t72 mit Hilfe einer Zugriffsbestätigungs-Nachricht ACF bestätigt. Im Endgerät D3 wird nach Empfang der Zugriffsbestätigungs-Nachricht ACF zu einem Zeitpunkt t74 an das Umwandlungsprogramm 28 eine Nachricht "DMDiverted" gesendet, weil an Hand der in der "Setup"-Nachricht enthaltenen Parameter vom Endgerät D3 festgestellt wird, daß es sich um eine Anrufumleitung im Rahmen der Rufverteilung handelt. Im Gegensatz zu einer "Setup"-Nachricht für eine Verbindung außerhalb der Rufverteilung wird anstelle der dort gesendeten Nachricht "DMOffered", nun die Nachricht "DMDiverted" gesendet:
- Die Nachricht "DMDiverted" enthält als Verbindungskennzeichen "connection" das Kennzeichen D3HC2.
- Als Kennzeichen "divertingDevice" des umleitenden Endgerätes ist das Kennzeichen D2 des gleichnamigen Endgerätes angegeben. Dieses Kennzeichen wird aus der "Setup"-Nachricht übernommen.
- Als Kennzeichen "newDestination" für das Ziel der Umleitung wird das Kennzeichen D3 des Endgerätes D3 angegeben.
- Als Umleitungsgrund "cause" wird der Grund Rufumleitung angegeben, auch "Call Forward" genannt.
- Der Parameter "localConnectionInfo" für den lokalen Verbindungszustand hat den Wert 0.

Nach dem Empfang der Nachricht "DMDiverted" wird im Umwandlungsprogramm 28 zu einem Zeitpunkt t76 eine Zuordnung zwischen dem Kennzeichen HC2 und dem Ruf Cl hergestellt. Ebenso wird eine Zuordnung zwischen Kennzeichen D3HC2 und D3C1 aufgebaut. Die Zuordnung des Verbindungskennzeichens HC1 zum Ruf C1 wird aufgehoben, siehe Zeitpunkt t78. Zum gleichen Zeitpunkt wird im Endgerät D1 das Verbindungskennzeichen HC1 wieder freigegeben, siehe Bezugszeichen 180.

Zu einem Zeitpunkt t80 sendet das Endgerät D3 gemäß Standard H.323 eine Alarmnachricht "Alerting" an das Endgerät D1. Als Verbindungskennzeichen wird das Kennzeichen HC2 verwendet. Zu einem folgenden Zeitpunkt t82 sendet das Endgerät D3 eine Nachricht "DMDelivered" an das Umwandlungsprogramm 28, um anzuzeigen, daß der am Endgerät D3 ankommende Ruf der Bedienperson dieses Gerätes gemeldet worden ist:
- Die Nachricht "DMDelivered" enthält das Verbindungskennzeichen "connection" = D3HC2.
- Für das rufende Endgerät "Calling Device" ist das Endgerät D1 angegeben.
- Ein Kennzeichen "alertingDevice" für das alarmierte Endgerät bezeichnet das Endgerät D3.
- Ein Kennzeichen "calledDevice" für das gerufene Endgerät betrifft das Endgerät D2.
- Ein Kennzeichen "lastRedirectionDevice" für das zuletzt in die Umleitung einbezogene Endgerät, betrifft ebenfalls das Endgerät D2.

Zwischen den Zeitpunkten t80 und t82 liegt ein Zeitpunkt t84, zu dem das Umwandlungsprogramm 28 als Reaktion auf den Empfang der Nachricht "DMDiverted" eine Ereignisnachricht "Event Diverted" an das Rufverteilungs-Programm 42 sendet:
- Die Ereignisnachricht enthält das Überwachungskennzeichen "monitorCrossRefID" = D3.
- Als Verbindungskennzeichen "connection" ist das Kennzeichen D2C1 angegeben.
- Als Kennzeichen "divertingDevice" des umleitenden Endgerätes ist das Kennzeichen D2 vermerkt.
- Als Kennzeichen "newDestination" für das neue Ziel ist das Kennzeichen D3 des gleichnamigen Endgerätes in der Nachricht enthalten.
- Als Umleitungsgrund "cause" ist die Rufverteilung "ACD Forward" angegeben.
- Der Parameter "localConnectionInfo" für den Verbindungszustand hat den Wert 0.

Die Werte für das umleitende Endgerät, das neue Ziel, den Grund und den Verbindungszustand werden aus der Nachricht "DMDiverted" übernommen.

Nach dem Empfang der Nachricht "DMDelivered" führt das Umwandlungsprogramm 28 zu einem Zeitpunkt t86 eine Umwandlung des Verbindungskennzeichens D3HC2 in das Verbindungskennzeichen D3C1 durch. Die Nachricht "DMDelivered" wird vom Umwandlungsprogramm 28 an das Rufverteilungsprogramm 42 zu einem Zeitpunkt t88 mit Hilfe einer Ereignisnachricht "Event Delivered" weitergeleitet:
- In der Nachricht ist das umgewandelte Verbindungskennzeichen D3C1 als Parameter "connection" für die Verbindung enthalten.
- Als Überwachungskennzeichen "monitorCrossRefID" ist das Kennzeichen D3 angegeben.
- Die Ereignisnachricht "Event Delivered" enthält einen Parameter "alertingDevice" zur Bezeichnung des alarmierten Endgerätes, hier das Endgerät D3.
- Ein Parameter "callingDevice" für das rufende Endgerät bezeichnet das Endgerät D1.
- Ein Parameter "calledDevice" für das gerufene Endgerät betrifft das Endgerät D2.
- Ein Parameter "RedirectionDevice" für das umleitende Endgerät weist auf das Endgerät D2 hin.
- Ein Parameter für den Umleitungsgrund "cause" enthält einen Wert für die Rufverteilung, auch "ACD Forward" genannt.

Zu einem Zeitpunkt t90 wird vom Endgerät D1 als Reaktion auf den Empfang der "Alerting"-Nachricht, siehe Zeitpunkt t80, standardgemäß eine Auslösenachricht "ReleaseComplete" an das Endgerät D2 gesendet, um die ursprüngliche Verbindung, d.h. die Verbindung mit dem Kennzeichen HC1 zum zentralen Endgerät D2 vollständig auszulösen. Zu einem Zeitpunkt t92 sendet das Endgerät D3 gemäß Standard H.323 eine Verbindungsnachricht "Connect" an das Endgerät D1, um zu signalisieren, daß die Bedienperson des Endgerätes D3 den Ruf entgegengenommen hat. Die Verbindungsnachricht enthält als Verbindungskennzeichen das Kennzeichen HC2. Außerdem ist ein Parameter enthalten, nämlich der Parameter "divertingLegInfo3.Invoke" der auf die Rufumleitung hinweist. Als Nummer "redirectionNr" des Gerätes, zu dem umgeleitet worden ist, ist die Nummer des Endgerätes D3 angegeben.

Anschließend sendet das Zubringerprogramm 36 des Endgerätes D3 zu einem Zeitpunkt t94 eine Nachricht "DMEstablished" an das Umwandlungsprogramm 28, um auch auf der CSTA III-Ebene den Verbindungsaufbau zu signalisieren. Die Nachricht "DMEstablished" enthält:
- einen Parameter "establishedConnection" zur Bezeichnung der aufgebauten Verbindung, hier mit dem Wert D3HC2,
- einen Parameter "answeringDevice" für das antwortende Endgerät, hier das Endgerät D3,
- einen Parameter "callingDevice" für das rufende Endgerät, hier das Endgerät D1,
- einen Parameter "calledDevice" für das gerufene Endgerät, hier das Endgerät D2,
- einen Parameter "lastRedirectionDevice" für das letzte umleitende Endgerät, hier das Endgerät D2, und
- einen Parameter "cause" für den Umleitungsgrund, hier eine Rufweiterleitung, auch als "Call Forward" bezeichnet.

Zu einem Zeitpunkt t96 wird das Verbindungskennzeichen D3HC2 aus der Nachricht "DMEstablished" in das Kennzeichen D3C1 umgewandelt, dessen Aufbau dem im Standard CSTA III vorgesehenen Aufbau entspricht.

Anschließend wird zu einem Zeitpunkt t98 das umgewandelte Kennzeichen D3C1 zum Senden einer Ereignisnachricht "Event Established" vom Umwandlungsprogramm 28 zum Rufverteilungs-Programm 42 verwendet. Die Ereignisnachricht "Event Established" enthält folgende Parameter:
- einen Überwachungsparameter "monitorCrossRefID" mit dem Wert D3,
- einen Parameter "establishedConnection" für die aufgebaute Verbindung, hier das umgewandelte Verbindungskennzeichen D3C1,
- einen Parameter "answeringDevice" für das antwortende Endgerät, hier das Endgerät D3,
- einen Parameter "callingDevice" für das rufende Endgerät, hier das Endgerät D1,
- einen Parameter "calledDevice" für das gerufene Endgerät, hier das Endgerät D2,
- einen Parameter "redirectionDevice" für das umleitende Endgerät, hier das Endgerät D2, und
- einen Parameter "cause" zur Bezeichnung des Umleitungsgrundes, hier eine Rufverteilung, auch "ACD Forward" genannt.

Das Rufverteilungs-Programm 42 kann anhand der Ereignisnachricht "Event Established" den Aufbau der umgeleiteten Verbindung zwischen dem Endgerät D1 und dem Rufannahme-Endgerät D3 nachvollziehen.

Zu einem Zeitpunkt t100 sendet das Umwandlungsprogramm 28 eine Ereignisnachricht "Event AgentBusy" unter Einbeziehung des Diensterbringungsrechners 46 an das Rufverteilungs-Programm 42. Durch die Ereignisnachricht "Event AgentBusy" wird signalisiert, daß das Rufannahme-Endgerät D3 zur Zeit nicht für die Annahme von Rufen im Rahmen der Rufverteilung bereit ist. Die Ereignisnachricht enthält als Überwachungskennzeichen "monitorCrossRefID" das Kennzeichen des Endgerätes D3. Außerdem enthält die Ereignisnachricht ein Kennzeichen für das den Ruf im Rahmen der Rufverteilung annehmende Endgerät, d.h. das Kennzeichen D3. Auch ein Kennzeichen "AgentID" zur Identifizierung der Bedienperson des Endgerätes D3 ist in der Ereignisnachricht angegeben.

Das Umwandlungsprogramm 28 sendet die Ereignisnachricht "Event AgentBusy" nur dann, wenn es sich bei dem durch diese Nachricht betroffenen Ruf um einen Ruf im Rahmen der Anrufverteilung handelt. An Hand des Parameters "called Device" = D2 in der Nachricht "DM Established" kann das Umwandlungsprogramm 28 feststellen, daß es sich um einen Ruf im Rahmen der Rufverteilung handelt, weil das Rufeingangsendgerät D2 ursprünglich gerufen worden ist.

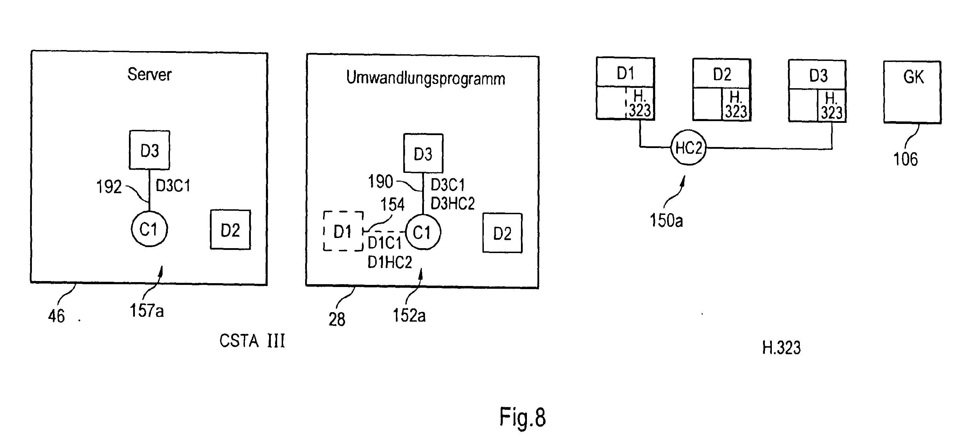

Figur 8 zeigt Kennzeichen von Verbindungsmodellen 150a und 152a nach der Rufumleitung im Rahmen der Rufverteilung. Das Kennzeichen des H.323-Verbindungsmodells 150a hat sich im Vergleich zum Kennzeichen des Verbindungsmodells 150 geändert. Die Verbindung zwischen dem Endgerät D1 und dem Rufannahme-Endgerät D3 hat das Verbindungskennzeichen HC2.

Das Verbindungsmodell 152a betrifft wie schon das Verbindungsmodell 152 weiterhin den Ruf Cl. Durch die Rufumleitung geht vom Ruf Cl nun eine Verbindung 190 aus, die zum Endgerät D3 führt. Die Verbindung 190 hat das CSTA III gemäße Kennzeichen D3C1. Das Umwandlungsprogramm hat dem Kennzeichen D3C1 das Kennzeichen D3HC2 zugeordnet. Durch Abtrennung des ersten Teils D3 dieses Kennzeichens entsteht das Kennzeichen HC2 gemäß Standard H.323.

Enthält auch das Endgerät D1 ein Zubringerprogramm, so würde im Verbindungsmodell 152a die Verbindung 154 zwischen dem Endgerät D1 und dem Ruf C1 nachgebildet werden. In diesem Fall wäre das CSTA III gemäße Kennzeichen D1C1 dieser Verbindung unverändert geblieben. Jedoch würde das Umwandlungsprogramm dem Kennzeichen D1C1 nun das Kennzeichen D1HC2 zuordnen. Durch Abtrennen des ersten Teils D1 entsteht aus diesem Kennzeichen das Kennzeichen HC2 für die entsprechende Verbindung gemäß Standard H.323. Die Verbindung 156 wird im Verbindungsmodell 152a nicht mehr nachgebildet.

Auf der Seite des Diensterbringungsrechners 46 bzw. des Rufverteilungs-Programms 42 ist nur der den Standard CSTA III betreffende Teil des Verbindungsmodells 152a bekannt. So wird in einem Verbindungsmodell 157a eine Verbindung 192 zwischen dem Ruf C1 und dem Endgerät D3 nachgebildet. Die Verbindung 192 hat das Kennzeichen D3C1. Die Verbindung 158 zwischen dem Ruf C1 und dem Endgerät D2 ist im Verbindungsmodell 157a im Vergleich zum Verbindungsmodell 157 nicht mehr enthalten.

An Hand der Figuren 1 bis 8 wird deutlich, wie eine Rufverteilung gemäß Standard CSTA III bei Endgeräten durchgeführt werden kann, die gemäß Standard H.323 arbeiten. Durch die Nachbildung verschiedener Verbindungsmodelle und die zweistufige Umwandlung der in den jeweiligen Modellen vorgesehenen Verbindungskennzeichen lassen sich beide Standards vereinen. Zwischen dem Umwandlungsprogramm 28 und dem Diensterbringungsrechner 46 bzw. zwischen Umwandlungsprogramm 28 und dem Rufverteilungs-Programm 42 werden zweiteilige Kennzeichen gemäß Standard CSTA III verwendet. Zwischen Umwandlungsprogramm 28 und Zubringerprogrammen 20 bzw. 38 werden zweiteilige Kennzeichen verwendet, die an das Kennzeichen gemäß Standard CSTA III angelehnt sind. Im Unterschied zum Standard wird jedoch im zweiten Teil der Verbindungskennzeichen Verbindungskennzeichen gemäß Standard H.323 verwendet. In den Endgeräten wird der zweite Teil aus den in den Zubringerprogrammen 20 und 38 verwendeten Kennzeichen abgetrennt, um das Kennzeichen gemäß Standard H.323 zu erhalten. Andererseits kann ausgehend von einem Kennzeichen gemäß Standard H.323 in einem Zubringerprogramm für das Umwandlungsprogramm 28 ein neues Kennzeichen durch Voranstellen eines Kennzeichens für das jeweilige Endgerät D2 bzw. D3 erzeugt werden.

Das erläuterte Verfahren läßt sich im Rahmen der Erfindung auch abwandeln. Beispielsweise können Verbindungen zu den Endgeräten Dl, D2 bzw. D3 auch über die Zugangseinheit 106 aufgebaut werden, siehe Standard H.323, Abschnitt 8.1, "Phase A - Call-Setup". Beim Ausführungsbeispiel gemäß Figuren 1 bis 8 wurde zur Signalisierung das im Standard CSTA vorgesehene Mehrfachschritt-Bestätigungsmodell genutzt. Bei diesem Modell wird zunächst durch eine Bestätigungsnachricht bestätigt, daß eine ankommende Nachricht alle erforderlichen Parameter enthält. In einer zweiten Stufe wird beispielsweise durch eine Ereignisnachricht die fehlerfreie Ausführung der Anforderung bestätigt. Bei anderen Ausführungsbeispielen werden andere Bestätigungsmodelle eingesetzt.

Das erfindungsgemäße Verfahren und seine Ausgestaltungen werden auch in Tele-Kommunikationsnetzen eingesetzt, bei denen mehrere lokale Netzwerke miteinander verbunden sind, wie beispielsweise im Internet. Das bedeutet, daß die Endgeräte D1 bis D3 an verschiedene lokale Netze angeschlossen sind, die jeweils eine Zugangseinheit (Gatekeeper) haben. Die Zugangseinheiten tauschen wie im Standard H.323 vorgesehen miteinander Nachrichten aus, um die Endgeräte zu steuern.

Bei anderen Ausführungsbeispielen werden anstelle des Protokolls gemäß CSTA-Standard andere Protokolle mit einer ähnlichen Leistungsfähigkeit eingesetzt, z.B. das Protokoll TAPI der Firma MICROSOFT, das Protokoll JTAPI der Firma SUN oder das Protokoll TSAPI der Firma NOVELL. Bei einem nächsten Ausführungsbeispiel werden durch das Umwandlungsprogramm 28 Nachrichten gemäß verschiedener Protokolle entgegengenommen. In diesem Zusammenhang wird auf die Offenbarung in der deutschen Patentanmeldung mit der Anmeldenummer 19947032.4 verwiesen.

## Patentansprüche

1. Verfahren zum Steuern zusätzlicher Leistungsfunktionen (ACD),
bei dem Daten zu mindestens einem Endgerät (D1 bis D3) in einem Kommunikationsnetz (10) unter Verwendung mindestens eines Kennzeichens (HC1, HC2) übertragen werden, das gemäß einem ersten Verbindungsmodell (150) zur Kennzeichnung einer Verbindung dient,
das im ersten Verbindungsmodell (150) vorgesehene Kennzeichen (HC1) in mindestens ein Kennzeichen (D2C1, D2HC1) umgewandelt wird, das gemäß einem für die Steuerung zusätzlicher Leistungsfunktionen von einem Rechner aus vorgesehenen zweiten Verbindungsmodell (152) zur Kennzeichnung einer Verbindung (156) dient,
und bei dem die Funktionalität mindestens eines Endgerätes (D2, D3) um mindestens eine zusätzliche Leistungsfunktion (ACD) unter Verwendung des im zweiten Verbindungsmodell (152) vorgesehenen Kennzeichens (D2C1) erweitert wird.

2. Verfahren nach Anspruch 1, dadurch **gekennzeichnet,** daß die im Kommunikationsnetz (10) übertragenen Daten Daten unterschiedlicher Medienarten enthalten, insbesondere Sprachdaten und/oder Bilddaten und/oder Programmdaten.

3. Verfahren nach Anspruch 1 oder 2, dadurch **gekennzeichnet,** daß das erste Verbindungsmodell (150) für die Übertragung von Daten unterschiedlicher Medienarten festgelegt worden ist, insbesondere durch den Standard H.323 oder einen auf diesen Standard aufbauenden Standard.

4. Verfahren nach einem der vorhergehenden Ansprüche, dadurch **gekennzeichnet,** daß das im ersten Verbindungsmodell (150) festgelegte Kennzeichen (HC1)ein Verbindungskennzeichen ist, das eine zwischen mindestens zwei Endgeräten (D1, D2) aufzubauende oder bestehende Verbindung kennzeichnet.

5. Verfahren nach einem der vorhergehenden Ansprüche, dadurch **gekennzeichnet,** daß das zweite Verbindungsmodell (152) für die Steuerung zusätzlicher Leistungsfunktionen von Endgeräten (D1 bis D3) in einem Kommunikationsnetz (10) von einem Rechner (42) aus festgelegt worden ist, insbesondere durch den Standard CSTA oder einem auf diesem Standard aufbauenden Standard (CSTA III).

6. Verfahren nach einem der vorhergehenden Ansprüche, dadurch **gekennzeichnet,** daß das im zweiten Verbindungsmodell (152) festgelegte Kennzeichen (D2C1) einen ersten Teil (D2) zur Kennzeichnung eines an der Verbindung beteiligten Endgerätes (D2) und einen zweiten Teil (C1) zur Kennzeichnung des betreffenden Rufes (C1) enthält.

7. Verfahren nach einem der vorhergehenden Ansprüche, dadurch **gekennzeichnet,** daß die zusätzliche Leistungsfunktion eine automatische Rufverteilung (ACD) von einem zentralen Endgerät (D2) für die zentrale Anwahl auf Annahmeendgeräte (D3) zur Rufannahme betrifft.

8. Verfahren nach Anspruch 7, dadurch **gekennzeichnet,** daß in dem zentralen Endgerät (D2) und in den Annahmeendgeräten (D3) jeweils ein Zubringerprogramm (24, 26) ausgeführt wird,
daß im Zubringerprogramm (24, 26) Nachrichten mit einem zentralen Umwandlungsprogramm (28) ausgetauscht werden, welches als Schnittstelle zwischen einem Steuerprogramm (42) für die Steuerung der Rufverteilung (ACD) und zwischen in die Rufverteilung einbezogenen Endgeräten (D1 bis D3) arbeitet.

9. Verfahren nach Anspruch 8, dadurch **gekennzeichnet,** daß das Umwandlungsprogramm (28) die Kennzeichen (HC1, D2C1) ineinander umwandelt.

10. Verfahren nach Anspruch 8 oder 9, dadurch **gekennzeichnet,** daß von einem Endgerät (D1) ohne Zubringerprogramm kommende Anrufe nach demselben Verfahren verteilt werden, wie von Endgeräten (D2, D3) mit Zubringerprogramm (24, 26) kommende Anrufe.

11. Verfahren nach einem der Ansprüche 8 bis 10, dadurch **gekennzeichnet,** daß beim Starten eines Zubringerprogramms (24, 26) an das Umwandlungsprogramm (28) eine Registriernachricht (DMRegisterRequest) gesendet wird, die ein Datum zur Kennzeichnung des die Nachricht sendenden Endgerätes (D2, D3) enthält.

12. Verfahren nach Anspruch 11, dadurch **gekennzeichnet,** daß das Umwandlungsprogramm (28) die Kennzeichen der registrierten Endgeräte (D2, D3) an das Steuerprogramm (42) sendet,
und daß vom Umwandlungsprogramm (28) zumindest die vom zentralen Endgerät (D2) eintreffenden Nachrichten an das Steuerprogramm (42) weitergeleitet werden.

13. Verfahren nach Anspruch 12, dadurch **gekennzeichnet,** daß zwischen Umwandlungsprogramm (28) und dem Steuerprogramm (42) ein Verteilprogramm (46) eingesetzt wird, das die Weiterleitung von Nachrichten abhängig von Zielvorgaben steuert.

14. Verfahren nach Anspruch 13, dadurch **gekennzeichnet,** daß vom Steuerprogramm (42) kommende Nachrichten an das Umwandlungsprogramm (28) an Hand eines vom Steuerprogramm (42) erzeugten Kennzeichens weitergeleitet werden, welches das Umwandlungsprogramm (28) direkt oder indirekt bezeichnet,
und/oder daß vom Umwandlungsprogramm (28) kommende Nachrichten ein Kennzeichen (monitorCrossRefID) enthalten, das in einer Nachricht zur Überwachung eines bestimmten Endgerätes zuvor vom Steuerprogramm (42) an das Umwandlungsprogramm (28) übermittelt worden ist.

15. Verfahren nach Anspruch 13 oder 14, dadurch **gekennzeichnet,** daß in einem Annahmeendgerät (D3) ein Rufannahmeprogramm (40) ausgeführt wird,
und daß bei der Ausführung des Rufannahmeprogramms (40) erzeugte Nachrichten über das Verteilprogramm (46) an das Umwandlungsprogramm (28) weitergeleitet werden.

16. Verfahren nach Anspruch 15, dadurch **gekennzeichnet,** daß beim Start eines Rufannahmeprogramms (40) an das Umwandlungsprogramm (28) eine Nachricht (SetAgentState) gesendet wird, in der der Betriebszustand des Endgerätes signalisiert wird.

17. Verfahren nach einem der Ansprüche 7 bis 16, dadurch **gekennzeichnet,** daß ein Ruf an das zentrale Endgerät (D2) gemäß einem auf dem ersten Verbindungsmodell (150) aufbauenden Verfahren bearbeitet wird,
daß zusätzlich vom zentralen Endgerät (D2) über das Umwandlungsprogramm (28) an das Steuerprogramm (42) eine Nachricht (Event Delivered) gesendet wird, welche die Anwahl des zentralen Endgerätes (D2) signalisiert.

18. Verfahren nach Anspruch 17, dadurch **gekennzeichnet,** daß nach Empfang der die Anwahl signalisierenden Nachricht (Event Delivered) durch das Steuerprogramm (42) von diesem Programm eine Nachricht (deflectCall) zur Rufumleitung an ein Rufannahmeendgerät (D3) gesendet wird,
die Nachricht (deflectCall) zur Rufumleitung vom Umwandlungsprogramm (28) an das zentrale Endgerät (D3) weitergeleitet wird,
und daß die Rufumleitung gemäß einem auf dem ersten Verbindungsmodell (150) aufbauenden Verfahren (H.450.3) durchgeführt wird.

19. Verfahren nach Anspruch 18, dadurch **gekennzeichnet,** daß das den umgeleiteten Ruf empfangende Annahmeendgerät (D3) eine Ereignisnachricht (DMDiverted) sendet, die das Eintreffen eines umgeleiteten Rufes signalisiert,
und daß die Ereignisnachricht (DMDiverted, EventDiverted) über das Umwandlungsprogramm (28) an das Steuerprogramm (42) weitergeleitet wird.

20. Verfahren nach Anspruch 19, dadurch **gekennzeichnet,** daß nach dem Aufbau einer Verbindung zwischen dem rufenden Endgerät (D1) und dem den umgeleiteten Ruf annehmenden Annahmeendgerät (D3) vom Umwandlungsprogramm (28) an das Steuerprogramm (42) eine Nachricht (Event AgentBusy) gesendet wird, die signalisiert, daß das Annahmeendgerät (D3) zur Zeit nicht in die Rufverteilung einbezogen werden kann.

21. Kommunikationsnetz (10),
mit mehreren zur Kommunikation dienenden Endgeräten (D1 bis D3), die unter Verwendung mindestens eines Kennzeichens (HC1) gesteuert werden, das in einem ersten Verbindungsmodell (150) zur Kennzeichnung einer Verbindung dient,
mit einem Rechner zur Ausführung eines Steuerprogramms (42) für die Steuerung zusätzlicher Leistungsfunktionen (ACD) der Endgeräte (D1 bis D3) unter Verwendung mindestens eines weiteren Kennzeichens (D2C1), das in einem vom ersten Verbindungsmodell (150) abweichenden Verbindungsmodell (152) zur Kennzeichnung einer Verbindung (156) dient,
und mit einem Umwandlungsprogramm (28), das auf dem Rechner oder einem anderen Rechner des Kommunikationsnetzes (10) ausgeführt wird und bei dessen Ausführung Kennzeichen (HC1) gemäß erstem Verbindungsmodell (150) in Kennzeichen (D2C1) gemäß zweitem Verbindungsmodell (152) und/oder in umgekehrter Richtung umgewandelt werden.

22. Umwandlungsprogramm (28),
mit einer durch den Prozessor einer Datenverarbeitungsanlage ausführbaren Befehlsfolge, dadurch **gekennzeichnet,** daß die Datenverarbeitungsanlage beim Ausführen der Befehlsfolge veranlaßt wird, ein gemäß einem ersten Verbindungsmodell (150) festgelegten Kennzeichen (HC1) zur Kennzeichnung einer Verbindung für die Übertragung von Daten zu mindestens einem Endgerät (D1 bis D3) in ein gemäß einem zweiten Verbindungsmodell (152) festgelegtes Kennzeichen (D2HC1) oder in umgekehrter Richtung umzuwandeln,
und daß das zweite Verbindungsmodell für die Steuerung zusätzlicher Leistungsfunktionen (ACD) der Endgeräte (D1 bis D3) von einem Rechner aus angewandt wird.

23. Umwandlungsprogramm (28) nach Anspruch 22, dadurch **gekennzeichnet,** daß es auf einem Datenträger gespeichert ist.
